# EUROPEAN PATENT SPECIFICATION

(11) **EP 2 244 051 B1**
(45) Date of publication and mention of the grant of the patent: **06.07.2011**
(21) Application number: 10155637.1
(22) Date of filing: 05.03.2010
(51) Int. Cl.: G01B 3/36, G01B 3/40

(54) **Thread ring gauge**
Gewindelehrring
Bague filetée

(30) Priority: 27.07.2009 TW 098213723 U; 21.04.2009 TW 098113222
(43) Date of publication of application: 27.10.2010
(73) Proprietor: Chuan Hong Precision Tool Manufacturing Co., Ltd., Kachsiung County, Taiwan R.O.C., Tienliao (TW)
(72) Inventor: Wu, San-Kuei, Taichung (TW)
(74) Representative: Schwerbrock, Florian

(56) References cited:
- US-A- 1 447 448
- US-A- 2 789 360

## Description

### BACKGROUND OF THE INVENTION

### 1. Field of the Invention

The present invention relates to a thread ring gauge and, more particularly, to a thread ring gauge including a measuring hole having a reducible inner diameter.

### 2. Description of the Related Art

Conventional thread ring gauges include a measuring hole having inner threading and an inner diameter for measuring sizes of screws or bolts. In one type of thread ring gauges, the inner diameter of the measuring hole is fixed such that the thread ting gauges can not be utilized after the inner threading is worn out and, thus, causes a change in the inner diameter. In another type of thread ring gauges, the inner diameter of the measuring hole is adjustable. In an example disclosed in U.S. Patent No. 1,447,448, the female gauge includes a gauge body having a split formed between two relatively adjustable end sections. The female gauge includes an interior gauge surface adapted to contact with parts to be gauged. Two aligned screws are mounted in aligned apertures in the end sections. One or both of the screws can be rotated to adjust the split.

In use, the inner diameter of the interior gauge surface of the female gauge is calibrated to be equal to a normal size. The adjusting and holding elements may be sealed by placing sealing wax in the appropriate apertures. However, the wax could crack due to reasons including, but not limited to, impact to the female gauge or a change in temperature. Recalibration is troublesome, for the precision tolerance is only about 8 µ.

Thus, a need exists for a thread ring gauge that can be easily calibrated while having a longer service life to reduce the costs.

### SUMMARY OF THE INVENTION

The primary objective of the present invention is to provide a thread ring gauge having an inner diameter that can be easily calibrated.

Another objective of the present invention is to provide a thread ring gauge having an inner diameter that can be easily fixed to a normal size.

A further objective of the present invention is to provide a thread ring gauge with a longer service life to reduce the costs.

Still another objective of the present invention is to provide a thread ring gauge that can avoid undesired shift between two ends in an axial direction of the thread ring gauge.

The present invention solves this need and other problems and fulfills the above objectives in the field of thread ring gauges by providing, in a preferred aspect, a thread ring gauge including a body having inner and outer peripheries spaced in a radial direction. The inner periphery has threading. The body includes a split extending from the outer periphery through the inner periphery in the radial direction, separating the body into first and second sections respectively having first and second end faces facing each other. The split is formed between the first and second end faces. The first end face includes a first hole extending in a width direction perpendicular to the radial direction. The first hole is interposed between and spaced from the inner and outer peripheries in the radial direction. The second end face includes a second hole extending in the width direction and coaxial with the first hole. At least one of the first and second holes extends to the outer periphery. The first end face includes a first groove extending away from the second end face in the width direction. The first groove extends from the outer periphery towards but spaced from the inner periphery in the radial direction. The first groove has a bottom wall facing the second end face. A first adjusting member is received in the first and second holes. The first adjusting member is movable to adjust a width of the slit between the first and second end faces in the width direction. A first gauge block is received in the first groove and abuts the bottom wall of the first groove and the second end face.

Preferably, the second end face includes a second groove extending away from the first end face in the width direction. The second groove extends from the outer periphery towards but spaced from the inner periphery in the radial direction. The second groove has a bottom wall facing the first end face. The first gauge block is received in the first and second grooves and abutting the bottom walls of the first and second grooves.

In a preferred embodiment, the bottom walls of the first and second grooves are arcuate, and the first gauge block is cylindrical and has circular cross sections. A second gauge block has circular cross sections with a diameter smaller than that of the circular cross sections of the first gauge block. The first gauge block is replaced with the second gauge block as the threading of the inner periphery becomes worn, and the second gauge block abuts the bottom walls of the first and second grooves.

In another preferred embodiment, the bottom walls of the first and second grooves define a conic hole having increasing diameters toward the outer periphery. The first gauge block includes an outer periphery engaged with the bottom walls of the first and second grooves. The first gauge block includes increasing diameters toward the outer periphery in the radial direction. The first gauge block is rotatable to move in the first and second grooves in the radial direction.

In a further preferred embodiment, the first gauge block has polygonal cross sections having first and second pairs of parallel sides. A first spacing between the first pair of parallel sides is larger than a second spacing between the second pair of parallel sides. The bottom walls of the first and second grooves have a spacing in the width direction the same as the first spacing between the first pair of parallel sides.

In still another embodiment, the first gauge block further includes a third pair of parallel sides. The third pair of parallel sides has a spacing smaller than the first spacing between the first pair of parallel sides and different from the second spacing between the second pair of parallel sides.

In a preferred embodiment, the first end face further includes a third hole extending in the width direction. The third hole is interposed between and spaced from the inner and outer peripheries in the radial direction. The second end face includes a fourth hole extending in the width direction and coaxial with the third hole. At least one of the third and fourth holes extends to the outer periphery. A second adjusting member is received in the third and fourth holes and movable to adjust the width of the slit in the width direction.

The present invention will become clearer in light of the following detailed description of illustrative embodiments of this invention described in connection with the drawings.

### BRIEF DESCRIPTION OF THE DRAWINGS

The illustrative embodiments may best be described by reference to the accompanying drawings where:
FIG 1 shows an exploded, perspective view of a thread ring gauge of a first embodiment according to the preferred teachings of the present invention.
FIG 2 shows an exploded, cross sectional view of the thread ring gauge of FIG 1.
FIG 3 shows a right side view of the thread ring gauge of FIG 2.
FIG 4 shows a cross sectional view of the thread ring gauge of FIG 1 in use.
FIG 5 is a cross sectional view similar to FIG 4, illustrating wear of the thread ring gauge of FIG 1.
FIG 6 shows a cross sectional view of the thread ring gauge of FIG 1 using a gauge block of a smaller size.
FIG 7 shows an exploded, perspective view of a thread ring gauge of a second embodiment according to the preferred teachings of the present invention.
FIG 8 shows an exploded, perspective view of a thread ring gauge of a third embodiment according to the preferred teachings of the present invention.
FIG 9 shows a cross sectional view of a gauge block of FIG 8.
FIG 10 shows an exploded, perspective view of a thread ring gauge of a fourth embodiment according to the preferred teachings of the present invention.
FIG 11 shows a cross sectional view of a gauge block of FIG. 10.
FIG 12 shows an exploded, perspective view of a thread ring gauge of a fifth embodiment according to the preferred teachings of the present invention.
FIG 13 shows an exploded, perspective view of a thread ring gauge of a sixth embodiment according to the preferred teachings of the present invention.
FIG. 14 shows an exploded, cross sectional view of the thread ring gauge of FIG 13.
FIG 15 shows a cross sectional view of the thread ring gauge of FIG 13 in use.
FIG 16 shows two included angles defined on the thread ring gauge of FIG. 13.
FIG. 17 shows an exploded, perspective view of a thread ring gauge of a seventh embodiment according to the preferred teachings of the present invention.
FIG 18 shows an exploded, cross sectional view of the thread ring gauge of FIG 17.
FIG 19 shows a cross sectional view of the thread ring gauge of FIG 17 in use.
FIG 20 shows an exploded, perspective view of a thread ring gauge of an eight embodiment according to the preferred teachings of the present invention.
FIG 21 shows a cross sectional view of the thread ring gauge of FIG 20 in use.

### DETAILED DESCRIPTION OF THE INVENTION

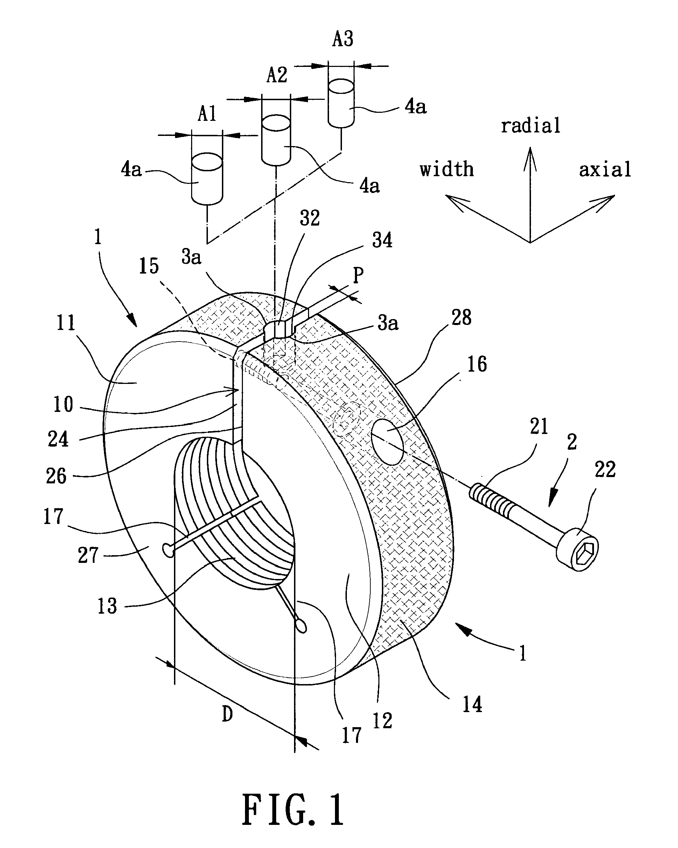

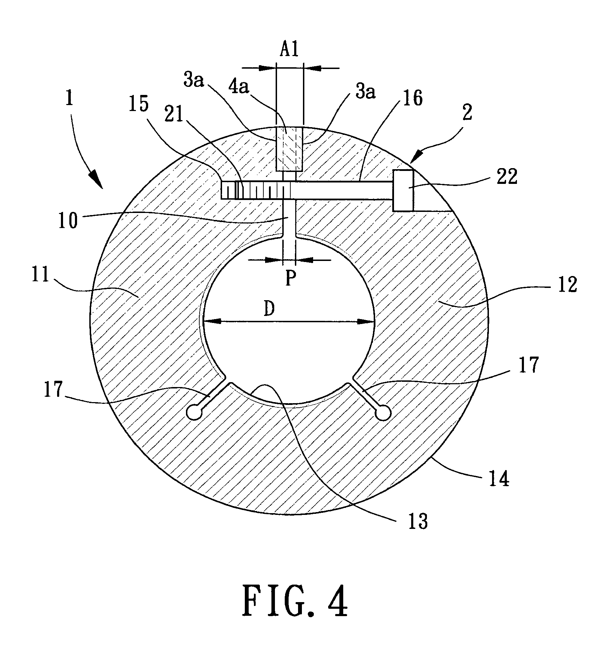

A thread ring gauge of a first embodiment according to the preferred teachings of the present invention is shown in FIGS. 1-6. The thread ring gauge includes a body 1, an adjusting member 2, and a plurality of gauge blocks 4a. The body 1 includes inner and outer peripheries 13 and 14 spaced in a radial direction. The inner periphery 13 defines a measuring hole and has threading to be in contact with an object to be gauged by the thread ring gauge. The body 10 includes a split 10 extending from the outer periphery 14 through the inner periphery 13 in the radial direction, separating the body 10 into first and second sections 11 and 12 respectively having first and second end faces 24 and 26 facing each other. The split 10 is formed between the first and second end faces 24 and 26. Thus, the split 10 has a width P between the first and second end faces 24 and 26 in the width direction. The first end face 24 includes a first hole 15 extending in a width direction perpendicular to the radial direction. The first hole 15 is interposed between and spaced from the inner and outer peripheries 13 and 14 in the radial direction. The second end face 26 includes a second hole 16 extending in the width direction and coaxial with the first hole 15. The first hole 15 is a blind screw hole, and the second hole 16 is a through-hole extending to the outer periphery 14. However, the first hole 15 can be a through-hole, and the second hole 16 can be a blind hole. The body 10 further includes first and second sides 27 and 28 extending between the inner and outer peripheries 13 and 14. The first and second sides 27 and 28 are spaced in an axial direction perpendicular to the radial and width directions. The body 10 further includes two gaps 17 extending from the inner periphery 13 towards but spaced from the outer periphery 14. Each gap 17 extends from the first side 27 through the second side 28 of the body 10 in the axial direction. The gaps 17 allow easy movement for reducing the width P of the slit 10 between the first and second end faces 24 and 26. However, only one or more than two gaps 17 can be formed in the body 10.

With reference to FIGS. 1-3, the adjusting member 2 is extended through the second hole 16 and engaged with the first hole 15. Specifically, the adjusting member 2 includes a threaded engaging end 21 threadedly engaged with the first hole 15 in the form of a screw hole. Furthermore, the adjusting member 2 includes an operative end 22 that can be engaged with a tool for rotating the adjusting member 2 to adjust the width P of the slit 10 between the first and second end faces 24 and 26 of the body 10.

With reference to FIGS. 1-3, the first end face 24 includes a first groove 3a extending away from the second end face 26 in the width direction. The first groove 3a extends from the outer periphery 14 towards but spaced from the inner periphery 13 in the radial direction. The first groove 3a has a bottom wall 32 facing the second end face 26. The second end face 26 includes a second groove 3a extending away from the first end face 24 in the width direction. The second groove 3a extends from the outer periphery 14 towards but spaced from the inner periphery 13 in the radial direction. The second groove 3a has a bottom wall 34 facing the first end face 24. The bottom walls 32 and 34 of the first and second grooves 3a are arcuate. A substantially cylindrical groove is defined by the first and second grooves 3a.

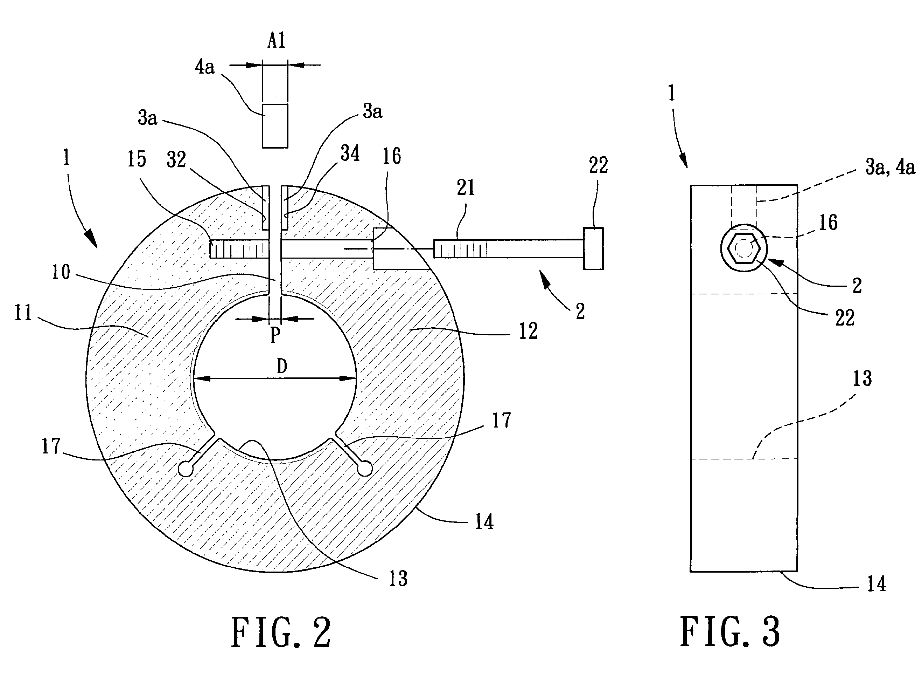

With reference to FIGS. 3-4, the thread ring gauge further includes first, second, and third gauge blocks 4a. Specifically, each of the first, second, and third gauge blocks 4a is cylindrical and has circular cross sections. Furthermore, the diameter A1 of the circular cross sections of the first gauge block 4a is larger than the diameter A2 of the circular cross sections of the second gauge block 4a, which, in turn, is larger than the diameter A3 of the circular cross sections of the third gauge block 4a. The diameters A1-A3 can be varied according to needs. As an example, the difference between the diameters A1 and A2 can be equal to that between the diameters A2 and A3. The bottom walls 32 and 34 of the first and second grooves 3a have a spacing the same as the diameter A1 of the first gauge block 4a.

In use, the first gauge block 4a having the diameter A1 is inserted into the first and second grooves 3a. The threaded engaging end 21 of the adjusting member 2 is extended through the second hole 16 into the first hole 15 and then rotated to reduce the width P of the slit 10 until the first gauge block 4a abutting the bottom walls 32 and 34 of the first and second grooves 3a is securely held and no longer rotatable within the first and second grooves 3a. At this time, the inner periphery 13 has a normal diameter D. An object such as a screw or bolt to be gauged can be threadedly engaged with the threading of the inner periphery 13 of the thread ring gauge. If the object matches the threading of the inner periphery 13, the diameter of the object is equal to the normal diameter D of the inner periphery 13.

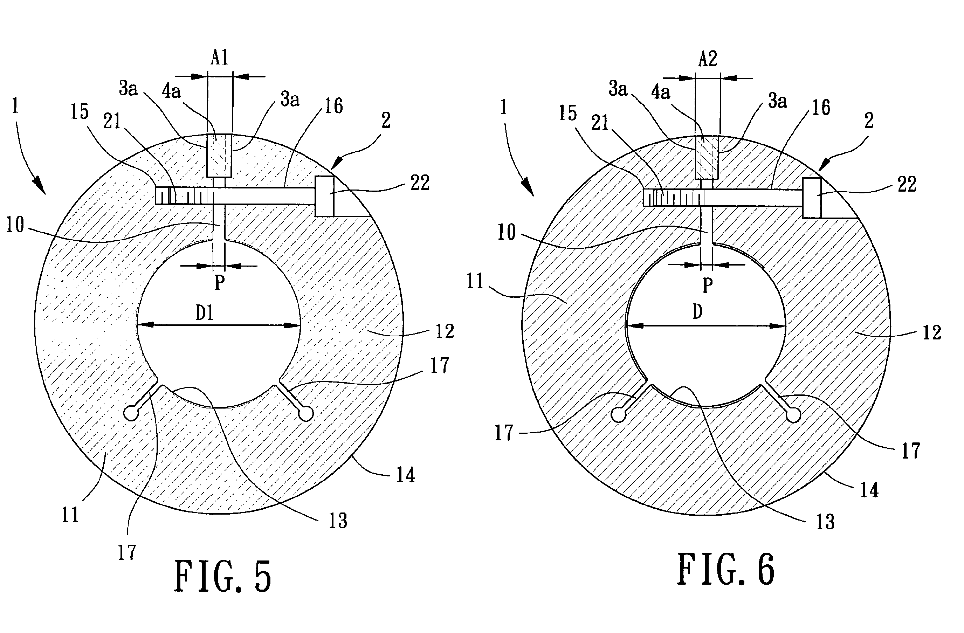

With reference to FIG 5, as the threading of the inner periphery 13 becomes worn after the thread ring gauge has been utilized for a period of time such that the inner diameter of the inner periphery 13 becomes larger then the normal diameter D (see diameter D1), the adjusting member 2 is rotated to increase the width P of the slit 10 so that the first gauge block 4a can be removed and replaced with the second gauge block 4a with diameter A2 smaller than diameter A1. The adjusting member 2 is rotated to reduce the width P of the slit 10 until the second gauge block 4a is securely held in the first and second grooves 3a. Thus, as shown in FIG 6, the inner diameter D1 of the inner periphery 13 of the body 10 is reduced back to the normal diameter D. The thread ring gauge can be utilized for another period of time until the threading of the inner periphery 13 becomes further worn. However, the second gauge block 4a can be replaced with the third gauge block 4a having the diameter A3 smaller than diameter A2 to extend the service life of the thread ring gauge. Operation of the thread ring gauge according to the preferred teachings of the present invention is easy and convenient without using wax while extending the service life of the thread ring gauge. Three or four replacements of the gauging blocks 4a are allowed by using more gauge blocks 4a. It can be appreciated that undesired shifting between the first and second sections 11 and 12 in the axial direction is avoided after the gauge block 4a is securely held in the first and second grooves 3a.

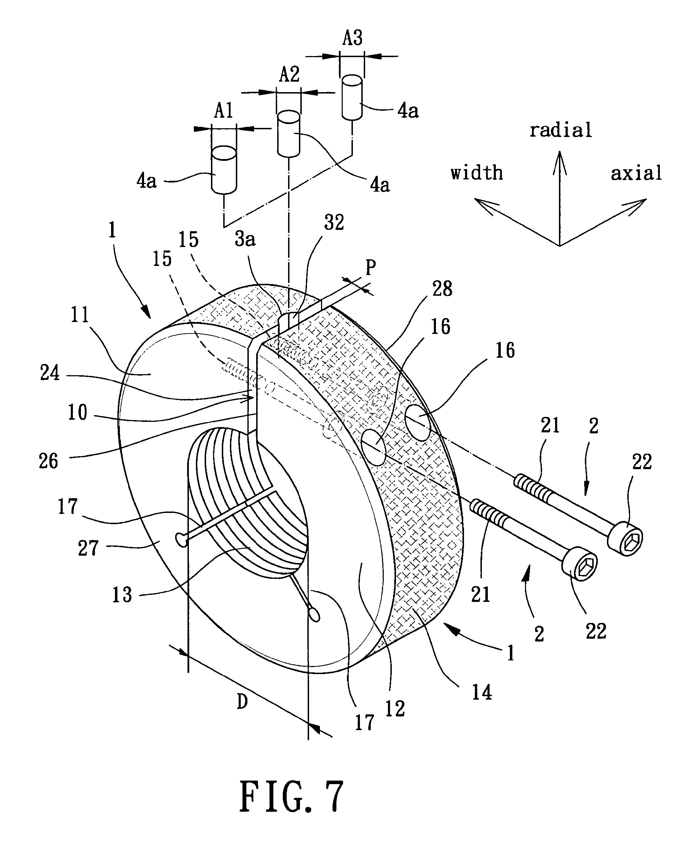

FIG 7 shows a thread ring gauge of a second embodiment according to the preferred teachings of the present invention. In this embodiment, the second end face 26 does not include the second groove 3a. Furthermore, the first end face 24 includes an additional first hole 15. Further, the second end face 26 includes an additional second hole 16 coaxial with the additional first hole 15. Further, an additional adjusting member 2 extends through the additional second hole 16 into the additional first hole 15. The first groove 3a is interposed between and spaced from the first holes 15 in the axial direction. Thus, the gauge block 4a can be securely held in the first groove 3a and sandwiched between the bottom wall 32 of the first groove 3a and the second end face 26, avoiding undesired shifting between the first and second sections 11 and 12 in the axial direction.

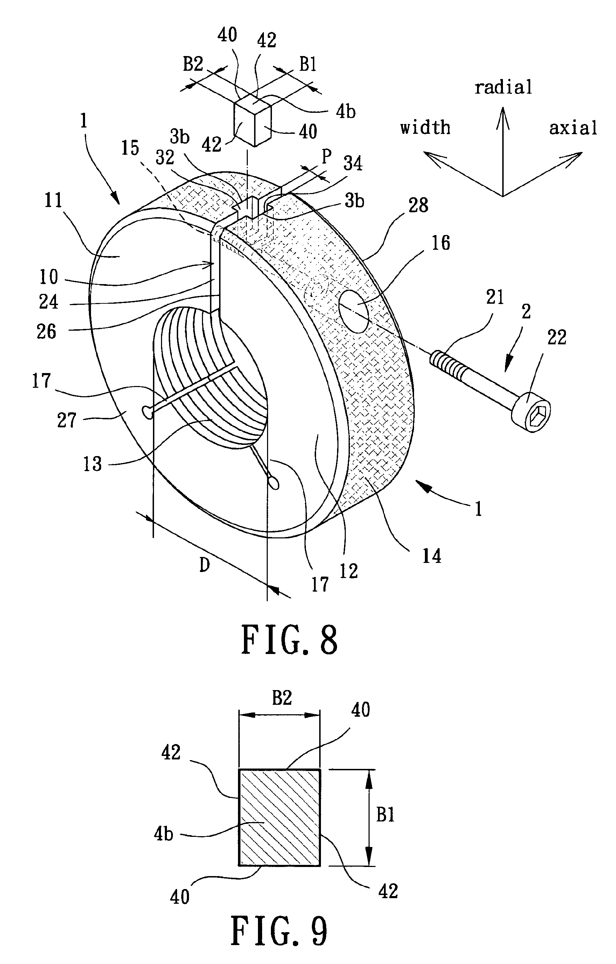

FIGS. 8 and 9 show a thread ring gauge of a third embodiment according to the preferred teachings of the present invention. In this embodiment, the thread ring gauge includes a gauge block 4b including rectangular cross sections having first and second pairs of parallel sides 40 and 42. A spacing B2 between the second pair of parallel sides 42 is smaller than a spacing B1 between the first pair of parallel sides 40. The bottom walls 32 and 34 of the first and second grooves 3b have a spacing in the width direction the same as the spacing B1 between the first pair of parallel sides 40. When in use, the first pair of parallel sides 40 of the gauge block 4b is securely sandwiched between the bottom walls 32 and 34 of the first and second grooves 3b so that the inner periphery 13 of the body 1 has the normal diameter D. As the threading of the inner periphery 13 becomes worn, the gauge block 4b can be removed and then reinserted into the first and second grooves 3b with the second pair of parallel sides 42 of the gauge block 4b securely sandwiched between the bottom walls 32 and 34 of the first and second groove 3b. The inner diameter of the inner periphery 13 of the body 1 can, thus, be reduced back to the normal diameter D, prolonging the service life of the thread ring gauge.

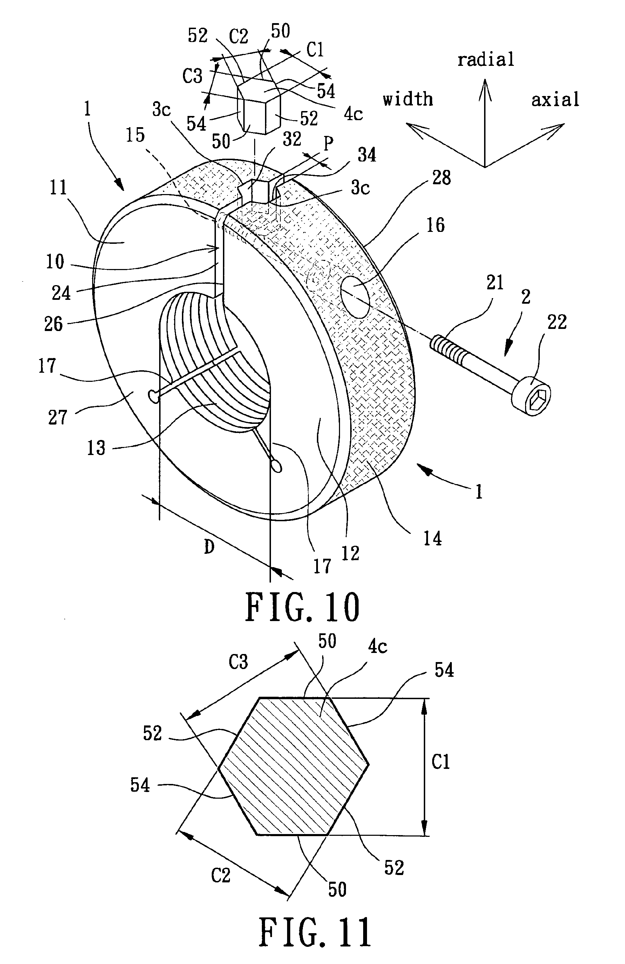

FIGS. 10 and 11 show a thread ring gauge of a fourth embodiment according to the preferred teachings of the present invention. In this embodiment, the thread ring gauge includes a gauge block 4c including hexagonal cross sections having first, second, and third pairs of parallel sides 50, 52, and 54. A spacing C1 between the first pair of parallel sides 50 is larger than a spacing C2 between the second pair of parallel sides 52, which, in turn, is larger than a spacing C3 between the third pair of parallel sides 54. The bottom walls 32 and 34 of the first and second grooves 3c have a spacing in the width direction the same as the spacing C1 between the first and second parallel sides 50. The difference between the spacings C1 and C2 can be the same as or different from that between the spacings C2 and C3. The first and second grooves 3c together define a compartment having hexagonal cross sections similar to those of the gauge block 4c. When in use, the first pair of parallel sides 50 of the gauge block 4c is securely sandwiched between the bottom walls 32 and 34 of the first and second grooves 3c so that the inner periphery 13 of the body 1 has the normal diameter D. As the threading of the inner periphery 13 becomes worn, the gauge block 4c can be removed and then reinserted into the first and second grooves 3c with the second pair of parallel sides 52 of the gauge block 4c securely sandwiched between the bottom walls 32 and 34 of the first and second groove 3c. The inner diameter of the inner periphery 13 of the body 1 can, thus, be reduced back to the normal diameter D, prolonging the service life of the thread ring gauge. Furthermore, as the threading of the inner periphery 13 becomes further worn, the gauge block 4c can be removed and then reinserted into the first and second grooves 3c with the third pair of parallel sides 54 of the gauge block 4c securely sandwiched between the bottom walls 32 and 34 of the first and second groove 3c. The inner diameter of the inner periphery 13 of the body 1 can, thus, be reduced back to the normal diameter D, further prolonging the service life of the thread ring gauge.

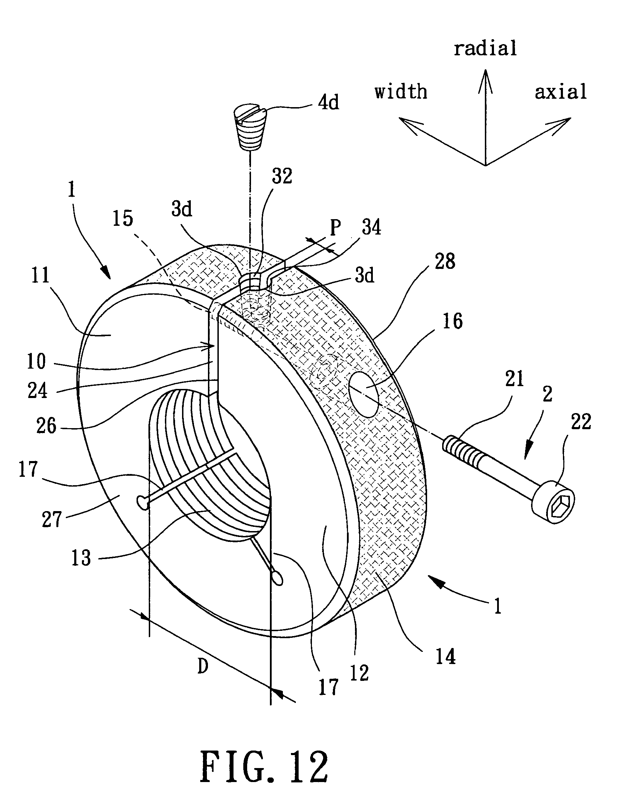

FIG 12 shows a threaded ring gauge of a fifth embodiment according to the preferred teachings of the present invention. Specifically, the bottom walls 32 and 34 of the first and second grooves 3d in this embodiment are threaded and define a conic hole having increasing diameters toward the outer periphery 14. The threaded ring gauge includes a gauge block 4d having a threaded outer periphery threadedly engaged with the threaded bottom walls 32 and 34 of the first and second grooves 3d. The gauge block 4d includes increasing diameters toward the outer periphery 14 in the radial direction. The gauge block 4d includes a slot in an outer end face thereof and can be driven by a tool such as a screwdriver. Specifically, as the threading of the inner periphery 13 becomes worn, the gauge block 4d can be rotated in the first and second grooves 3d and, thus, move in the radial direction. Furthermore, the adjusting member 2 can be rotated until the gauge block 4d is securely clamped between the first and second bottom walls 32 and 34. Thus, the inner diameter of the inner periphery 13 of the body 1 is reduced back to the normal diameter D.

It can be appreciated that the gauge blocks 4a having circular cross sections and the first and second grooves 3a forming a substantially cylindrical hole are preferred due to easy manufacture and processing. Furthermore, the effect of avoiding undesired shifting between the first and second sections 11 and 12 can be enhanced when the second end face 26 includes the second groove 3a.

The thread ring gauges according to the preferred teachings of the present invention has long service lives by utilizing gauge blocks 4a, 4b, 4c, and 4d sandwiched between the grooves 3a, 3b, 3c, and 3d. Furthermore, undesired shift in the axial direction between the first and second sections 11 and 12 can be avoided when the gauge blocks 4a, 4b, 4c, and 4d have cross sections the same as or similar to those of the grooves 3a, 3b, 3c and 3d. Further, undesired shift in the axial direction between the first and second sections 11 and 12 can be further avoided by utilizing two adjusting members 2.

The grooves 3a, 3b, 3c, and 3d and the corresponding gauge blocks 4a, 4b, 4c and 4d disclosed in previous embodiments above may be further modified, as illustrated in various embodiments below.

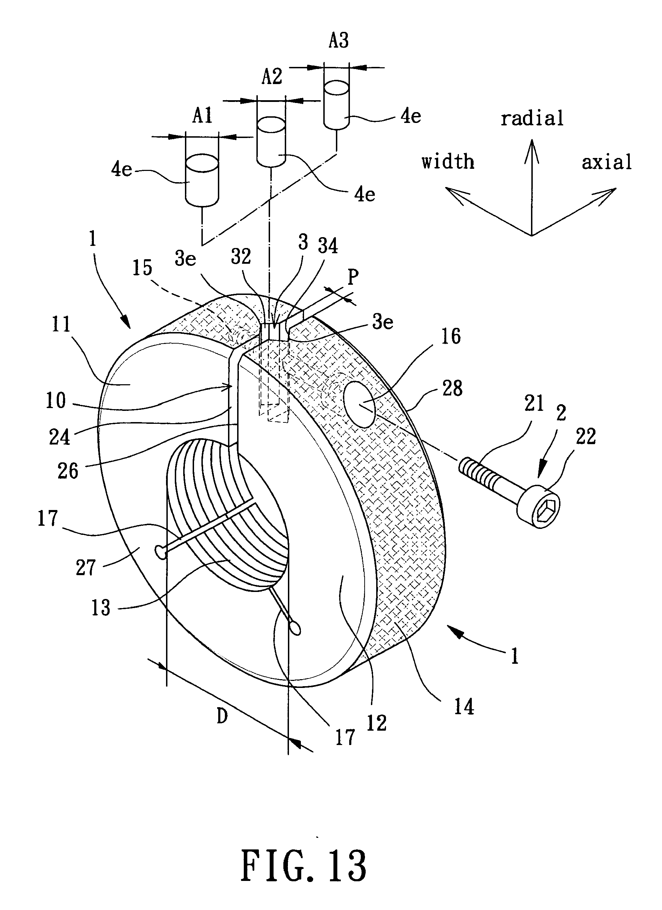

FIG 13 shows a thread ring gauge of a sixth embodiment according to the preferred teachings of the present invention. The thread ring gauge in the embodiment has a similar structure as the thread ring gauge in the first embodiment (FIG 1), so it's not described herein again for brevity.

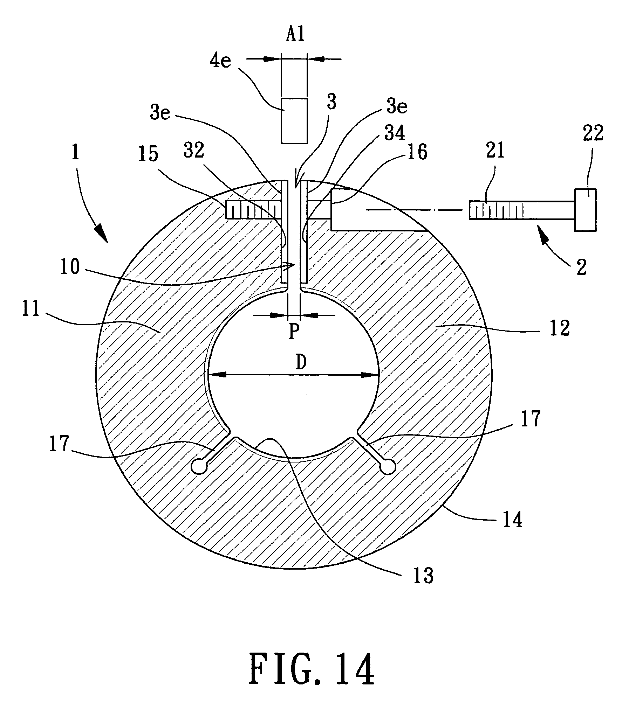

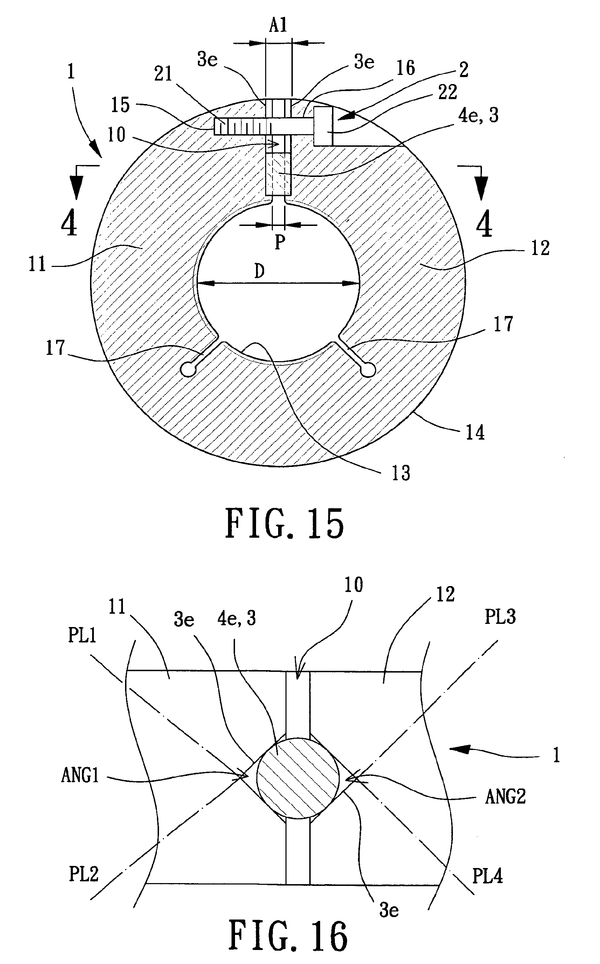

With reference to FIGS. 13 to 16, the first end face 24 includes a first groove 3e extending away from the second end face 26 in the width direction. In comparison with the first embodiment, the first groove 3e extends in a greater distance from the outer periphery 14 towards the inner periphery 13 in the radial direction. Similarly, the second end face 26 includes a second groove 3e extending away from the first end face 24 in the width direction, with the second groove 3e extending in a greater distance from the outer periphery 14 towards the inner periphery 13 in the radial direction. Furthermore, the first groove 3a has a bottom wall 32 facing the second end face 26 and the second groove 3e has a bottom wall 34 facing the first end face 24. As shown in FIG 16, the first groove 3e defines an included angle ANG1 by two planes PL1 and PL2. Similarly, the second groove 3e defines an included angle ANG2 by two planes PL3 and PL4. A substantially rectangular groove 3 is defined by the first and second grooves 3e.

In use, the first gauge block 4e having the diameter A1 is inserted into the first and second grooves 3e. The threaded engaging end 21 of the adjusting member 2 is extended through the second hole 16 into the first hole 15 and then rotated to reduce the width P of the slit 10 until the first gauge block 4e abutting the bottom walls 32 and 34 of the first and second grooves 3e is securely held and no longer rotatable within the first and second grooves 3a. At this time, the inner periphery 13 has a normal diameter D. In the embodiment, since the first gauge block 4e is inserted under the adjusting member 2 (according to FIG 15), the adjusting member 2 may be rotated more easily. In addition, due to the substantially rectangular compartment 3 defined by the first and second grooves 3e, the first gauge block 4e abutting the bottom walls 32 and 34 of the first and second grooves 3e may be securely held.

As the threading of the inner periphery 13 becomes worn after the thread ring gauge has been utilized for a period of time such that the inner diameter of the inner periphery 13 becomes larger then the normal diameter D (see diameter D1), the adjusting member 2 is rotated to increase the width P of the slit 10 so that the first gauge block 4e can be removed and replaced with the second gauge block 4e having diameter A2 smaller than the diameter A1. The adjusting member 2 is rotated to reduce the width P of the slit 10 until the second gauge block 4e is securely held in the first and second grooves 3e. Thus, the inner diameter D1 of the inner periphery 13 of the body 10 is reduced back to the normal diameter D. The thread ring gauge can be utilized for another period of time until the threading of the inner periphery 13 becomes further worn. However, the second gauge block 4e can be replaced with the third gauge block 4e having the diameter A3 smaller than the diameter A2 to extend the service life of the thread ring gauge. Operation of the thread ring gauge according to the preferred teachings of the present invention is easy and convenient without using wax while extending the service life of the thread ring gauge. Three or four replacements of the gauging blocks 4e are allowed by using more gauge blocks 4e. It can be appreciated that undesired shifting between the first and second sections 11 and 12 in the axial direction is avoided after the gauge block 4e is securely held in the first and second grooves 3e.

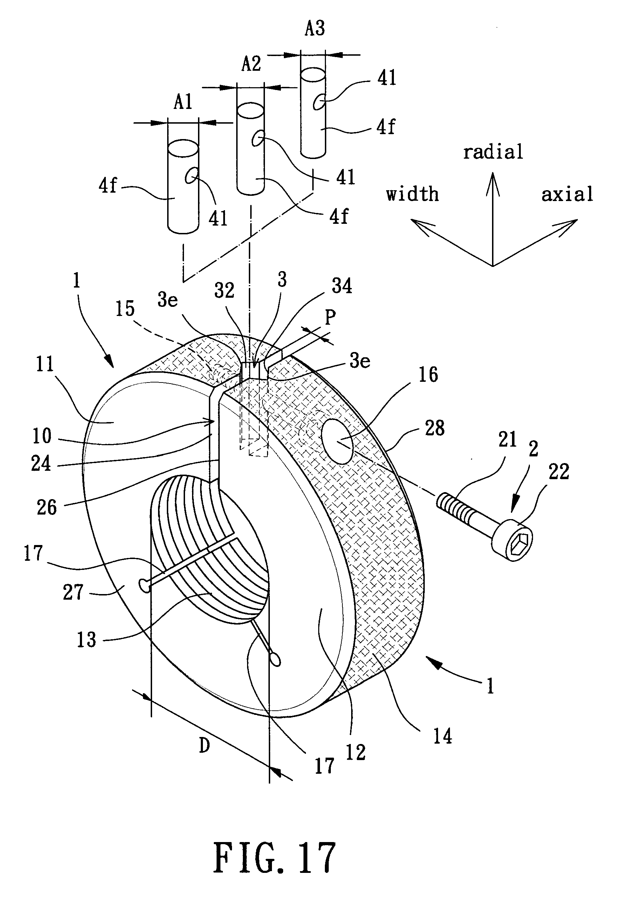

FIG 17 shows a thread ring gauge of a seventh embodiment according to the preferred teachings of the present invention. The thread ring gauge in the embodiment has a similar structure as the thread ring gauge in the sixth embodiment (FIG 13), so it's not described herein again for brevity.

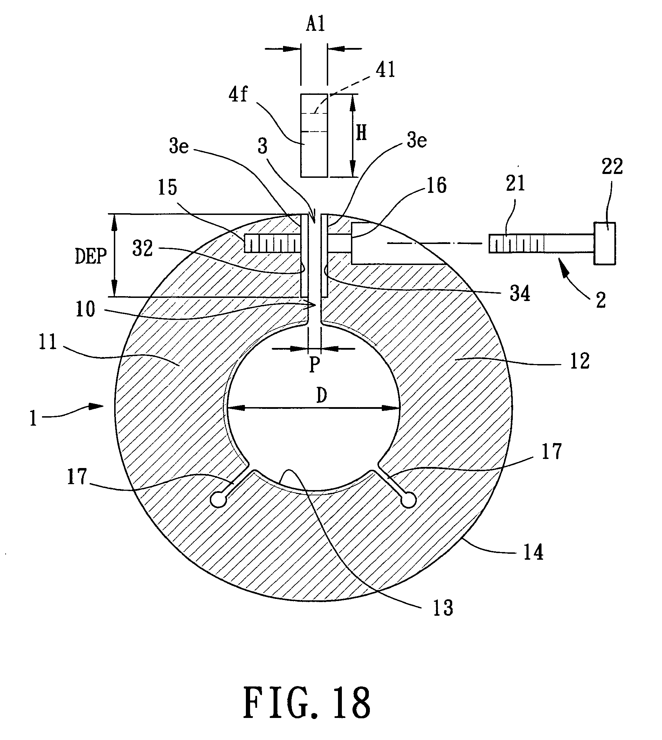

With reference to FIGS. 17 to 19, the thread ring gauge includes first, second and third gauge blocks 4f. Specifically, each of the first, second and third gauge blocks 4f is cylindrical and has circular cross sections. Furthermore, each of the first, second and third gauge blocks 4f has a through-hole 41 that is coaxial with the first hole 15 and the second hole 16 and allows the threaded engaging end 21 of the adjusting member 2 to be passed therethrough when assembled in the first and second grooves 3e. Furthermore, each of the first, second and third gauge blocks 4f has a height H smaller than a depth DEP of the substantially rectangular groove 3 defined by the first and second grooves 3e. Similar to the gauge blocks 4a, 4b, 4c, 4d and 4e described above, the diameter A1 of the circular cross sections of the first gauge block 4f is larger than the diameter A2 of the circular cross sections of the second gauge block 4f, which, in turn, is larger than the diameter A3 of the circular cross sections of the third gauge block 4f. The diameters A1-A3 can be varied according to needs. As an example, the difference between the diameters A1 and A2 can be equal to that between the diameters A2 and A3. The bottom walls 32 and 34 of the first and second grooves 3e have a spacing the same as the diameter A1 of the first gauge block 4a.

In use, the first gauge block 4f having the diameter A1 is inserted into the first and second grooves 3e. The threaded engaging end 21 of the adjusting member 2 is extended through the second hole 16 into the first hole 15 via the through-hole 41 and then rotated to reduce the width P of the slit 10 until the first gauge block 4f abutting the bottom walls 32 and 34 of the first and second grooves 3e is securely held and no longer rotatable within the first and second grooves 3e. Thus, the first gauge block 4f can be securely held in the substantially rectangular groove defined by the first and second grooves 3e, avoiding undesired shifting between the first and second sections 11 and 12 in the axial direction.

As the threading of the inner periphery 13 becomes worn, one skilled in the art would appreciate that the inner diameter of the inner periphery 13 of the body 10 may be maintained as the normal diameter D by changing the gauge blocks 4f as taught by the previous embodiments.

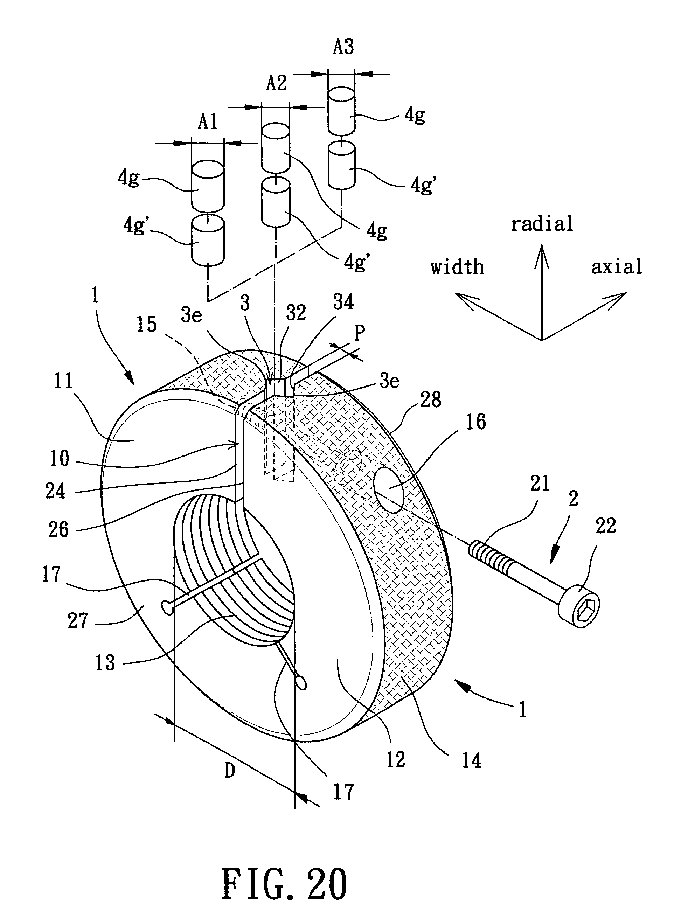

FIG 20 shows a thread ring gauge of an eight embodiment according to the preferred teachings of the present invention. The thread ring gauge in the embodiment has a similar structure as the thread ring gauge in the sixth and seventh embodiments (FIGS. 13 and 17), so it's not described herein again for brevity.

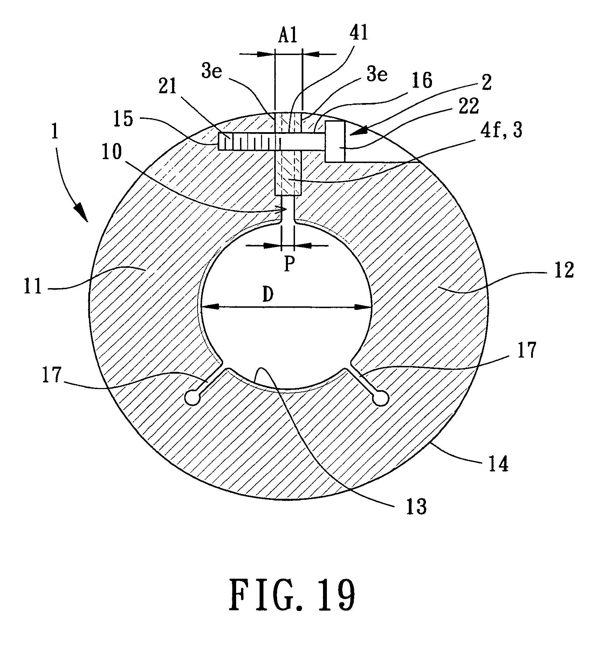

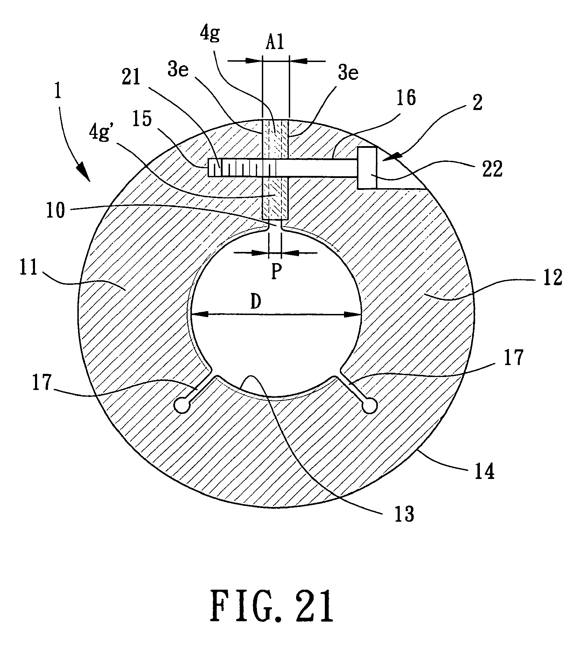

With reference to FIGS. 19 and 20, the thread ring gauge includes first, second and third sets of gauge blocks. Each of the first, second and third sets of gauge blocks includes two gauge blocks 4g and 4g', with both the gauge blocks 4g and 4g' being cylindrical and having the same circular cross sections. In use, with reference to FIG 21, the gauge block 4g' is firstly inserted into the substantially rectangular compartment 3 defined by the first and second grooves 3e. Following, the threaded engaging end 21 of the adjusting member 2 is extended through the second hole 16 into the first hole 15. Before the threaded engaging end 21 of the adjusting member 2 is screwed to the first hole 15, the gauge block 4g is subsequently inserted into the substantially rectangular compartment 3. Finally, the threaded engaging end 21 of the adjusting member 2 is screwed to the first hole 15 so that the gauge blocks 4g' and 4g are securely held within the first and second grooves 3e. Thus, undesired shifting between the first and second sections 11 and 12 in the axial direction, as well as the disengagement of the gauge block 4g', may be avoided.

Thus since the invention disclosed herein may be embodied in other specific forms, some of which forms have been indicated. The embodiments described herein are to be considered in all respects illustrative and not restrictive. The scope of the invention is to be indicated by the appended claims.

## Claims

1. A thread ring gauge comprising:
a body (1) including inner and outer peripheries (13, 14) spaced in a radial direction, with the inner periphery (13) having threading, with the body (1) including a split (10) extending from the outer periphery (14) through the inner periphery (13) in the radial direction, separating the body (1) into first and second sections (11, 12) respectively having first and second end faces (24, 26) facing each other, with the split (10) formed between the first and second end faces (24, 26), with the first end face (24, 26) including a first hole (15) extending in a width direction perpendicular to the radial direction, with the first hole (15) interposed between and spaced from the inner and outer peripheries (13, 14) in the radial direction, with the second end face (26) including a second hole (16) extending in the width direction and coaxial with the first hole (15), with at least one of the first and second holes (15, 16) extending to the outer periphery (14), with the first end face (24) including a first groove (3a, 3b, 3c, 3d, 3e) extending away from the second end face (26) in the width direction, with the first groove (3a, 3b, 3c, 3d, 3e) extending from the outer periphery (14) towards but spaced from the inner periphery (13) in the radial direction, with the first groove (3a, 3b, 3c, 3d, 3e) having a bottom wall (32) facing the second end face (26);
a first adjusting member (2) received in the first and second holes (15, 16), with the first adjusting member (2) being movable to adjust a width (P) of the slit (10) between the first and second end faces (24, 26) in the width direction; and
a first gauge block (4a, 4b, 4c, 4d, 4e, 4f) received in the first groove (3a, 3b, 3c, 3d, 3e) and abutting the bottom wall (32) of the first groove (3a, 3b, 3c, 3d, 3e) and the second end face (26).

2. The thread ring gauge as claimed in claim 1, with the second end face (26) including a second groove (3a, 3b, 3c, 3d, 3e) extending away from the first end face (24) in the width direction, with the second groove (3a, 3b, 3c, 3d, 3e) extending from the outer periphery (14) towards but spaced from the inner periphery (13) in the radial direction, with the second groove (3a, 3b, 3c, 3d, 3e) having a bottom wall (34) facing the first end face (24), and with the first gauge block (4a, 4b, 4c, 4d, 4e, 4f) received in the first and second grooves (3a, 3b, 3c, 3d, 3e) and abutting the bottom walls (32, 34) of the first and second grooves (3a, 3b, 3c, 3d, 3e).

3. The thread ring gauge as claimed in claim 2, with the bottom walls (32, 34) of the first and second grooves (3a) being arcuate, and with the first gauge block (4a) being cylindrical and having circular cross sections.

4. The thread ring gauge as claimed in claim 3, further comprising a second gauge block (4a) having circular cross sections with a diameter (A2) smaller than that (A1) of the circular cross sections of the first gauge block (4a), with the first gauge block (4a) being replaced with the second gauge block (4a) when the threading of the inner periphery (13) becomes worn, and with the second gauge block (4a) abutting the bottom walls (32, 34) of the first and second grooves (3a).

5. The thread ring gauge as claimed in claim 2, with the bottom walls (32, 34) of the first and second grooves (3d) being threaded and defining a conic hole having increasing diameters toward the outer periphery (14), with the first gauge block (4d) including a threaded outer periphery threadedly engaged with the bottom walls (32, 34) of the first and second grooves (3d), with the first gauge block (4d) including increasing diameters toward the outer periphery (14) in the radial direction, and with the first gauge block (4d) being rotatable to move in the first and second grooves (3d) in the radial direction.

6. The thread ring gauge as claimed in claim 2, with the first gauge block (4c) having polygonal cross sections having first and second pairs of parallel sides, with a first spacing (C1) between the first pair of parallel sides being larger than a second spacing (C2) between the second pair of parallel sides, with the bottom walls (32, 34) of the first and second grooves (3c) having a third spacing (C3) in the width direction the same as the first spacing (C1) between the first pair of parallel sides.

7. The thread ring gauge as claimed in claim 1, with the first hole (15) being a screw hole, with the first adjusting member (2) including a first, threaded end (21) threadedly engaged with the screw hole, and with the first adjusting member (2) further including a second end (22) adapted to be driven to adjust the width (P) of the slit (10).

8. The thread ring gauge as claimed in claim 1, with the first end face (24) further including a third hole (15) extending in the width direction, with the third hole (15) interposed between and spaced from the inner and outer peripheries (13, 14) in the radial direction, with the second end face (26) including a fourth hole (16) extending in the width direction and coaxial with the third hole (15), with at least one of the third and fourth holes (15, 16) extending to the outer periphery (14), with the thread ring gauge further comprising: a second adjusting member (2) received in the third and fourth holes (15, 16), with the second adjusting member (2) being movable to adjust the width (P) of the slit (10) in the width direction.

9. The thread ring gauge as claimed in claim 8, with the third hole (15) being a screw hole, with the second adjusting member (2) including a first, threaded end (21) threadedly engaged with the screw hole, and with the second adjusting member (2) further including a second end (22) adapted to be driven to adjust the width (P) of the slit (10).

10. The thread ring gauge as claimed in claim 1, with the body (1) further including first and second sides (27, 28) extending between the inner and outer peripheries (13, 14), with the first and second sides (27, 28) spaced in an axial direction perpendicular to the radial and width directions, with the body (1) further including at least one gap (17) extending from the inner periphery (13) towards but spaced from the outer periphery (14), and with said at least one gap (17) extending from the first side (27) through the second side (28) of the body (1) in the axial direction.

11. The thread ring gauge as claimed in claim 1, with each of the first and second grooves (3e) defining an included angle (ANG1, ANG2) by two planes (PL1, PL2 or PL3, PL4).

12. The thread ring gauge as claimed in claim 1, with the first and second grooves defining a substantially rectangular compartment (3), with the first gauge block (4f) having a height (H) smaller than a depth (DEP) of the substantially rectangular compartment (3).

13. The thread ring gauge as claimed in claim 1, with the first gauge block (4f) having a through-hole (41) that is coaxial with the first and second holes (15, 16) and allowing the first adjusting member (2) to be passed therethrough.

## Patentansprüche

1. Gewindelehrring umfassend:
einen Körper (1) mit einer inneren und äußeren Peripherie (13, 14), unterteilt in radialer Richtung, wobei die innere Peripherie (13) ein Gewinde aufweist, wobei der Körper (1) einen Spalt (10) aufweist, der sich von der äußeren Peripherie (14) durch die innere Peripherie (13) in radialer Richtung erstreckt, um den Körper (1) in einen ersten und zweiten Bereich (11, 12) bzw. eine erste und zweite Endfläche (24, 26), die sich gegenüberliegen, zu unterteilen, wobei der Spalt (10) zwischen der ersten und zweiten Endfläche (24, 26) ausgebildet ist, wobei die erste Endfläche (24, 26) eine erste Öffnung (15) aufweist, die sich in Breitenrichtung rechtwinklig zur radialen Richtung erstreckt, wobei sich die erste Öffnung (15) zwischen und in radialer Richtung abgeteilt von der inneren und äußere Peripherie (13, 14) befindet, wobei die zweite Endfläche (26) eine zweite Öffnung (16) aufweist, die sich in Breitenrichtung und koaxial zur ersten Öffnung (15) erstreckt, wobei mindestens eine der beiden ersten und zweiten Öffnungen (15, 16) sich zur äußeren Peripherie (14) erstreckt, wobei die erste Endfläche (24) eine erste Nut (3a, 3b, 3c, 3d, 3e) aufweist, die sich von der zweiten Endfläche (26) entfernend in Breitenrichtung erstreckt, wobei die erste Nut (3a, 3b, 3c, 3d, 3e) sich von der äußeren Peripherie (14) in Richtung aber in radialer Richtung abgeteilt von der inneren Peripherie (13) erstreckt, wobei die erste Nut (3a, 3b, 3c, 3d, 3e) eine untere Wand (32) aufweist, die der zweiten Endfläche (26) gegenübersteht;
ein erstes Einstellglied (2), das in der ersten und zweiten Öffnung (15, 16) aufgenommen wird, wobei das erste Einstellglied (2) beweglich ist, um die Breite (P) des Spalts (10) zwischen der ersten und zweiten Endfläche (24, 26) in Breitenrichtung einzustellen; und
einen ersten Messblock (4a, 4b, 4c, 4d, 4e, 4f), der in der ersten Nut (3a, 3b, 3c, 3d, 3e) aufgenommen wird und an der unteren Wand (32) der ersten Nut (3a, 3b, 3c, 3d, 3e) und der zweiten Endfläche (26) anliegt.

2. Gewindelehrring nach Anspruch 1, wobei die zweite Endfläche (26) eine zweite Nut (3a, 3b, 3c, 3d, 3e) aufweist, die sich von der ersten Endfläche (24) entfernend in Breitenrichtung erstreckt, wobei sich die zweite Nut (3a, 3b, 3c, 3d, 3e) von der äußeren Peripherie (14) in Richtung der aber in radialer Richtung abgeteilt von der inneren Peripherie (13) erstreckt, wobei die zweite Nut (3a, 3b, 3c, 3d, 3e) eine untere Wand (34) aufweist, die der ersten Endfläche (24) gegenübersteht, und wobei der erste Messblock (4a, 4b, 4c, 4d, 4e, 4f) von der ersten und zweiten Nut (3a, 3b, 3c, 3d, 3e) aufgenommen wird und an den unteren Wänden (32, 34) der ersten und zweiten Nut (3a, 3b, 3c, 3d, 3e) anliegt.

3. Gewindelehrring nach Anspruch 2, wobei die unteren Wände (32, 34) der ersten und zweiten Nut (3a) bogenförmig sind und wobei der erste Messblock (4a) zylinderförmig ist und kreisförmige Querschnitte aufweist.

4. Gewindelehrring nach Anspruch 3, ferner umfassend einen zweiten Messblock (4a), der kreisförmige Querschnitte mit einem Durchmesser (A2) aufweist, der kleiner sind als der (A1) der kreisförmigen Querschnitte des ersten Messblocks (4a), wobei der erste Messblock (4a) durch den zweiten Messblock (4a) ersetzt wird, wenn das Gewinde der inneren Peripherie (13) verschleißt, und wobei der zweite Messblock (4a) an den unteren Wänden (32, 34) der ersten und zweiten Nut (3a) anliegt.

5. Gewindelehrring nach Anspruch 2, wobei die unteren Wände (32, 34) der ersten und zweiten Nut (3d) ein Gewinde aufweisen und eine konische Öffnung definieren, die gegenüber der äußeren Peripherie (14) höhere Durchmesser aufweist, wobei der erste Messblock (4d) eine äußere Peripherie mit einem Gewinde aufweist, die schraubbar mit den unteren Wänden (32, 34) der ersten und zweiten Nut (3d) verbunden sind, wobei der erste Messblock (4d) höhere Durchmesser gegenüber der äußeren Peripherie (14) in radialer Richtung aufweist und wobei der erste Messblock (4d) in der ersten und zweiten Nut (3d) in radialer Richtung drehbar ist.

6. Gewindelehrring nach Anspruch 2, wobei der erste Messblock (4c) vieleckige Querschnitte mit ersten und zweiten Paaren paralleler Seiten aufweist, wobei der erste Zwischenraum (C1) zwischen dem ersten Paar der parallelen Seiten größer ist als der zweite Zwischenraum (C2) zwischen dem zweiten Paar der parallelen Seiten, wobei die unteren Wände (32, 34) der ersten und zweiten Nut (3c) einen dritten Zwischenraum (C3) in Breitenrichtung wie der erste Zwischenraum (C1) zwischen dem ersten Paar der parallelen Seiten aufweisen.

7. Gewindelehrring nach Anspruch 1, wobei die erste Öffnung (15) eine Gewindebohrung ist, wobei das erste Einstellglied (2) ein erstes Gewindeende (21) aufweist, das schraubbar mit der Gewindebohrung verbunden ist, und wobei das erste Einstellglied (2) ferner ein zweites Ende (22) aufweist, das für die Einstellung der Breite (P) des Spalts (10) ausgeführt ist.

8. Gewindelehrring nach Anspruch 1, wobei die erste Endfläche (24) ferner eine dritte Öffnung (15) aufweist, die sich in Breitenrichtung erstreckt, wobei sich die dritte Öffnung (15) zwischen und in radialer Richtung abgeteilt von der inneren und äußeren Peripherie (13, 14) befindet, wobei die zweite Endfläche (26) eine vierte Öffnung (16) aufweist, die sich in Breitenrichtung und koaxial zur dritten Öffnung (15) erstreckt, wobei mindestens eine der dritten und vierten Öffnung (15, 16) sich zur äußeren Peripherie (14) erstreckt, wobei der Gewindelehrring ferner umfasst: ein zweites Einstellglied (2), das in der dritten und vierten Öffnung (15, 16) aufgenommen wird, wobei das zweite Einstellglied (2) beweglich ist, um die Breite (P) des Spalts (10) in Breitenrichtung einzustellen;

9. Gewindelehrring nach Anspruch 8, wobei die dritte Öffnung (15) eine Gewindebohrung ist, wobei das zweite Einstellglied (2) ein erstes Gewindeende (21) aufweist, das schraubbar mit der Gewindebohrung verbunden ist, und wobei das zweite Einstellglied (2) ferner ein zweites Ende (22) aufweist, das zur Einstellung der Breite (P) des Spalts (10) ausgeführt ist.

10. Gewindelehrring nach Anspruch 1, wobei der Körper (1) ferner erste und zweite Seiten (27, 28) aufweist, die sich zwischen der inneren und äußeren Peripherie (13, 14) erstrecken, wobei die erste und zweite Seite (27, 28) einen Zwischenraum in axialer Richtung rechtwinklig zur radialen und Breitenrichtung aufweisen, wobei der Körper (1) ferner mindestens einen Spalt (17) aufweist, der sich von der inneren Peripherie (13) zur aber abgeteilt von der äußeren Peripherie (14) erstreckt, und wobei der mindestens eine Spalt (17) sich von der ersten Seite (27) durch die zweite Seite (28) des Körpers (1) in axialer Richtung erstreckt.

11. Gewindelehrring nach Anspruch 1, wobei die erste und zweite Nut (3e) jeweils einen Winkel (ANG1, ANG2) durch zwei Ebenen (PL1, PL2 oder PL3, PL4) definiert.

12. Gewindelehrring nach Anspruch 1, wobei die erste und zweite Nut einen im Wesentlichen rechteckigen Raum (3) definieren, wobei der erste Messblock (4f) eine Höhe (H) aufweist, die kleiner ist als die Tiefe (DEP) des im Wesentlichen rechteckigen Raums (3).

13. Gewindelehrring nach Anspruch 1, wobei der erste Messblock (4f) eine Durchgangsöffnung (41) aufweist, die sich koaxial zur ersten und zweiten Öffnung (15, 16) befindet, und es dem ersten Einstellglied (2) ermöglicht, dort hindurchgeführt zu werden.

## Revendications

1. Une bague filetée comprenant :
un corps (1) comportant des périphéries intérieure et extérieure (13, 14) espacées dans un sens radial, la périphérie intérieure (13) ayant un filetage, le corps (1) comportant une fente (10) partant de la périphérie extérieure (14) et traversant la périphérie intérieure (13) dans le sens radial, séparant le corps (1) en une première section et une deuxième section (11, 12) dont la première et la deuxième faces d'extrémité (24, 26), respectivement, se font face, la fente (10) étant formée entre la première et la deuxième faces d'extrémité (24, 26), la première face d'extrémité (24, 26) comportant un premier trou (15) s'étendant dans le sens de la largeur perpendiculairement au sens radial, le premier trou (15) étant interposé entre les périphéries intérieure et extérieure, et espacé de celles-ci (13, 14) dans le sens radial, la deuxième face d'extrémité (26) comportant un deuxième trou (16) s'étendant dans le sens de la largeur et coaxialement par rapport au premier trou (15), l'un au moins des premier et deuxième trous (15, 16) s'étendant à la périphérie extérieure (14), la première face d'extrémité (24) comportant une première gorge (3a, 3b, 3c, 3d, 3e) s'écartant de la deuxième face d'extrémité (26) dans le sens de la largeur, la première gorge (3a, 3b, 3c, 3d, 3e) allant de la périphérie extérieure (14) à la périphérie intérieure (13) dans le sens radial, mais étant espacée de la périphérie intérieure, la première gorge (3a, 3b, 3c, 3d, 3e) ayant une paroi inférieure (32) tournée vers la deuxième face d'extrémité (26) ;
un premier élément de réglage (2) logé dans le premier et le deuxième trous (15, 16), le premier élément de réglage (2) étant mobile pour régler une largeur (P) de la fente (10) entre la première et la deuxième faces d'extrémité (24, 26) dans le sens de la largeur, et
une première cale étalon (4a, 4b, 4c, 4d, 4e, 4f) logée dans la première gorge (3a, 3b, 3c, 3d, 3e) et butant contre la paroi inférieure (32) de la première gorge (3a, 3b, 3c, 3d, 3e) et la deuxième face d'extrémité (26).

2. Bague filetée selon revendication 1, la deuxième face d'extrémité (26) comportant une deuxième gorge (3a, 3b, 3c, 3d, 3e) s'écartant de la première face d'extrémité (24) dans le sens de la largeur, la deuxième gorge (3a, 3b, 3c, 3d, 3e) allant de la périphérie extérieure (14) à la périphérie intérieure (13) dans le sens radial, mais étant espacée de la périphérie intérieure, la deuxième gorge (3a, 3b, 3c, 3d, 3e) ayant une paroi inférieure (34) tournée vers la première face d'extrémité (24), et la première cale étalon (4a, 4b, 4c, 4d, 4e, 4f) étant logée dans la première et la deuxième gorges (3a, 3b, 3c, 3d, 3e) et butant contre les parois inférieures (32, 34) de la première et de la deuxième gorges (3a, 3b, 3c, 3d, 3e).

3. Bague filetée selon revendication 2, les parois inférieures (32, 34) de la première et de la deuxième gorges (3a) étant arquées, et la première cale étalon (4a) étant cylindrique et ayant des sections transversales.

4. Bague filetée selon revendication 3, comportant par ailleurs une deuxième cale étalon (4a) ayant des sections circulaires d'un diamètre (A2) inférieur à celui de (A1) des sections circulaires de la première cale étalon (4a), la première cale étalon (4a) étant remplacée par la deuxième cale étalon (4a) lorsque le filetage de la périphérie intérieure (13) est usé, et la deuxième cale étalon (4a) butant contre les parois inférieures (32, 34) de la première et de la deuxième gorges (3a).

5. Bague filetée selon revendication 2, les parois inférieures (32, 34) de la première et de la deuxième gorges (3d) étant filetées et définissant un trou conique ayant des diamètres augmentant vers la périphérie extérieure (14), la première cale étalon (4d) comportant une périphérie extérieure filetée introduite par vissage dans les parois inférieures (32, 34) de la première et de la deuxième gorges (3d), la première cale étalon (4d) comportant des diamètres augmentant vers la périphérie extérieure (14) dans le sens radial, et la première cale étalon (4d) étant rotative pour se déplacer dans la première et la deuxième gorges (3d) dans le sens radial.

6. Bague filetée selon revendication 2, la première cale étalon (4c) ayant des sections polygonales comportant la première et la deuxième paire de faces parallèles, un premier espacement (C1) entre la première paire de faces parallèles étant plus grand qu'un deuxième espacement (C2) entre la deuxième paire de faces parallèles, les parois inférieures (32, 34) de la première et de la deuxième gorges (3c) ayant un troisième espacement (C3) dans le sens de la largeur, qui est le même que le premier espacement (C1) entre la première paire de faces parallèles.

7. Bague filetée selon revendication 1, le premier trou (15) étant un trou fileté, le premier élément de réglage (2) comportant un premier embout fileté (21) introduit par vissage dans le trou fileté, et le premier élément de réglage (2) comportant par ailleurs un deuxième embout (22) adapté pour être vissé afin de régler la largeur (P) de la fente (10).

8. Bague filetée selon revendication 1, la première face d'extrémité (24) comportant par ailleurs un troisième trou (15) s'étendant dans le sens de la largeur, le troisième trou (15) étant interposé entre les périphéries intérieure et extérieure (13, 14) et espacé de celles-ci dans le sens radial, la deuxième face d'extrémité (26) comportant un quatrième trou (16) s'étendant dans le sens de la largeur et coaxialement par rapport au troisième trou (15), l'un des troisième et quatrième trous (15, 16) au moins s'étendant vers la périphérie extérieure (14), la bague filetée comportant par ailleurs : un deuxième élément de réglage (2) logé dans le troisième et le quatrième trous (15, 16), le deuxième élément de réglage (2) étant mobile pour régler la largeur (P) de la fente (10) dans le sens de la largeur.

9. Bague filetée selon revendication 8, le troisième trou (15) étant un trou fileté, le deuxième élément de réglage (2) comportant un premier embout fileté (21) introduit par vissage dans le trou fileté, le deuxième élément de réglage (2) comportant par ailleurs un deuxième embout (22) adapté pour être vissé afin de régler la largeur (P) de la fente (10).

10. Bague filetée selon revendication 1, le corps (1) comportant par ailleurs une première et une deuxième faxes (27, 28) s'étendant entre les périphéries intérieure et extérieure (13, 14), la première et la deuxième faces (27, 28) étant espacées dans le sens axial perpendiculairement au sens radial et au sens de la largeur, le corps (1) comportant par ailleurs au moins un espace (17) allant de la périphérie intérieure (13) à la périphérie extérieure (14) mais espacé de celle-ci, le dit espace (17) partant de la première face (27) et traversant la deuxième face (28) du corps (1) dans le sens axial.

11. Bague filetée selon revendication 1, la première et la deuxième gorges (3e) définissant chacune un angle inclus (ANG1, ANG2) par deux plans (PL1, PL2 ou PL3, PL4).

12. Bague filetée selon revendication 1, la première et la deuxième gorges définissant un compartiment substantiellement rectangulaire (3), la première cale étalon (4f) ayant une hauteur (H) inférieure à une profondeur (DEP) du compartiment substantiellement rectangulaire (3).

13. Bague filetée selon revendication 1, la première cale étalon (4f) ayant un trou débouchant (41) coaxial par rapport au premier et au deuxième trous (15, 16) et permettant le passage du premier élément de réglage (2).
